# EUROPÄISCHE PATENTANMELDUNG

(11) **EP 2 985 693 A1**
(43) Veröffentlichungstag der Anmeldung: **17.02.2016**
(21) Anmeldenummer: 15155211.4
(22) Anmeldetag: 16.02.2015
(51) Int. Cl.: G06F 9/445

(54) **Appliance mit Ladeprogramm, Verfahren zur Konfiguration einer Appliance**

(30) Priorität: 13.08.2014 DE 102014111591
(71) Anmelder: zertisa GmbH, 80336 München (DE)
(72) Erfinder: Konopka, Robert, 85737 Ismaning (DE); Körner, Martin, 80799 München (DE)
(74) Vertreter: Würmser, Julian

(57) **Zusammenfassung**

Es wird eine Appliance beschrieben, die mindestens eine Kommunikationseinrichtung zur Funkkommunikation mit einem Netzwerk, mindestens eine Recheneinheit und mindestens einen Speicher zur Speicherung von Daten umfasst. In dem Speicher sind mindestens zwei Firmwareabbilder und eine Datenstruktur gespeichert, die jedem der Firmwareabbilder mindestens einen Auslösezustand zuordnet. Ein Ladeprogramm im Speicher ist dazu ausgebildet, nach dem Starten der Vorrichtung eine Liste von Ist-Zuständen der Appliance zu erstellen, die Datenstruktur mit der Liste von Ist-Zuständen abzugleichen und unter Berücksichtigung des Abgleichs ein Firmwareabbild auszuwählen und das ausgewählte Firmwareabbild zu laden.

## Beschreibung

Die vorliegende Erfindung betrifft allgemein die Anpassung einer drahtlos verbundenen Anwendung und, genauer gesagt, das Verschieben des Anpassungsprozesses hin zum Endnutzer mit der Zielsetzung, den Aufwand auf der Seite des Herstellers zu reduzieren. Obwohl in dieser Anmeldung überwiegend der Begriff der Mobiltelefone benutzt wird, weil diese die weitverbreitetsten und bekanntesten Beispiele von Appliances sind, sollte es klar sein, dass die beschriebene Technologie ebenso für jede beliebige drahtlos verbindbare Appliance anwendbar ist. Die letztendliche Nutzung der Appliance ist hierbei irrelevant.

Die Verteilung bzw. Distribution von modernen elektronischen Appliances, wie beispielsweise Mobiltelefonen oder Tablet-Computern, ist eine herausfordernde und aus Einzelhandelssicht einzigartige Tätigkeit. Nicht nur ist es so, dass ein Benutzer eine weitreichende Flexibilität und Auswahl fordert, sondern der Erfolg hängt maßgeblich von regionalen Anforderungen und wirtschaftlichen Bedürfnissen unterschiedlicher Produktlinien der Appliances ab. Heutzutage wird die Anpassung fast jedes Geräts erwartet. Dies widerspricht den Bedürfnissen der Hersteller nach einer Standardisierung zugunsten einer Herstellung mit großen Stückzahlen. Das Mobiltelefon ist ein ausgezeichnetes Beispiel einer Appliance, die den meisten Leuten bekannt ist, und kann somit verwendet werden, um die Technologie und die Abläufe in einem einfachen Rahmen zu beschreiben.

Früher wurden Mobiltelefonmodelle in Chargen für bestimmte Märkte angepasst. Üblicherweise wurden die Chargen für einen bestimmten Verkäufer bzw. Distributor oder Dienstanbieter bzw. Serviceprovider hergestellt, für die ein physikalisches Anpassen der Brandings genauso wie eine softwareseitige Anpassung beispielsweise der Firmware erfolgte. Eine besondere Schwierigkeit besteht darin, dass die Größe der Charge üblicherweise an eine relativ hohe Anzahl von Einheiten gebunden ist, die durch die Herstellung und Verkaufseffizienz bestimmt wird. Hierdurch wird ein unvermeidbares Inventar-Managementproblem für die Verteilung generiert. Wenn Produkte beliebt sind und schnell verkauft werden, dann können Verkaufschancen deswegen verpasst werden, weil ein Benutzer aufgrund der Unverfügbarkeit des Modells, das ausverkauft wurde, ein Produkt eines Wettbewerbers kauft. Andernfalls, wenn ein Produkt unbeliebt ist, muss das Inventar dadurch geleert werden, dass der Preis reduziert wird oder das Produkt muss in ein anderes Gebiet versandt werden, in dem es ein möglicher Wettbewerber für die Produkte des Verkäufers ist. Diese Situation ist häufig, beispielsweise, wenn ein unglücklich gewähltes physikalisches Branding die Ursache des Problems ist; diesbezüglich gibt es über die Marktsegmente eine Vielzahl von Beispielen, wobei eine im Ursprungsland gutklingende Marke in einem anderen Kulturkreis oder Land eine wenig vorteilhafte Bedeutung hat.

Die Durchdringung des Marktes durch den Flashspeicher (elektronisch veränderbarer Speicher) bietet die Möglichkeit, nicht gebrandete Produkte ("plain vanilla") vor Ort (beispielsweise in den Endverbrauchergeschäften) so zu branden, dass ein angepasstes Erscheinungsbild, beispielsweise des Startbildschirms, entsteht, das die Marke eines bestimmten Dienstanbieters bewirbt. Ein frühes Beispiel der effektiven Nutzung dieser Möglichkeit war das Branding der Mobilfunk-Discounter in Europa. Diese Dienstanbieter kauften Zeitblöcke von etablierten Dienstanbietern, die über kein eigenes Mobilfunknetz verfügten, und verkauften diese an ihre eigenen, markenloyalen Kunden weiter, wobei der Begrüßungsbildschirm die Marke des Weiterverkäufers, und nicht die des Netzwerkbetreibers zeigte. Beispielsweise verkaufte Virgin Mobile™ ein Nokia™-Telefon, das derart konfiguriert war, dass es innerhalb des T-Mobile™-Netzwerkes arbeitete, wobei das Telefon ein "Virgin Mobile™"-Logo auf dem Bildschirm zusätzlich zu kleineren kosmetischen Variationen in den Untermenüs zeigte, die von der Hauptseite erreichbar waren. Dieses Verhalten wurde durch Firmware erreicht und an einen bestimmten SIM (Subscriber Identification Module)-Kartensatz geknüpft. Eine Anpassung zum Zeitpunkt des Verkaufes erforderte geschulte Mitarbeiter. In vielen Fällen erforderte der Konfigurationsprozess/ Anpassungsprozess, dass die Appliance mit einem Computer über ein Kabel verbunden und/oder eine besondere Hardware vorhanden war und/oder ein speziell geschulter Techniker tätig wurde.

Das physikalische Branding wurde üblicherweise bei Massenprodukten dadurch umgesetzt, dass die Appliance des Benutzers mit einem austauschbaren Gehäuse bestückt wurde, das ein bisschen mehr als lediglich eine austauschbare Front- bzw. Abdeckplatte umfasste. Unterschiedlich aussehende Produkte mit identischer elektronischer Ausstattung waren üblich. Es ist vorteilhaft, dass die das Aussehen gestaltenden Elemente relativ günstig sind, da diese Kunststoffteile von unterschiedlicher farblicher Ausgestaltung mit bedruckten Kennzeichnungen sind, die sich einfach auf das Produkt aufklippen lassen; in einigen Fällen wird ein Tastaturgummi (eine geformte Komponente, die einen leitenden Teil hat, der verwendet wird, um mit den Kontakten eines Schaltkreises verbunden zu werden und als Schalterschließer zu dienen) in Verbindung mit der dazu passenden Frontplatte ausgetauscht. Es war für Appliances üblich, dass diese nur teilweise zusammengesetzten Produkte verschickt wurden. Beispielsweise wurden häufig die Batterien und die Frontpaneele verwendet, um das Aussehen einer Appliance maßgeblich zu bestimmen und viele Appliances unterscheiden sich lediglich anhand dieser beiden physikalischen Komponenten. Diese Teile werden dann zum Zeitpunkt der Distribution zu einem einzigen Benutzerpaket - dem endgültigen Produkt - zusammengesetzt, und die Verpackung wird verwendet, um das enthaltene Branding anzuzeigen.

Frühere Mobiltelefone waren Unikate, da sie hochintegrierte Systeme mit einem Mikrocontroller und einem Software (oder Firmware)-Kernel waren. Die Funktionalität war vorbestimmt und die Möglichkeiten eines Brandings nach der Herstellung waren ziemlich beschränkt. Ein übliches Branding zur Marktunterscheidung wurde dadurch erreicht, dass der Zugriff auf vorprogrammierte Funktionen durch mechanische Mittel, wie beispielsweise das Nichtvorsehen jeglichen Knöpfen oder Schaltern an einem Handgerät, unterbunden wurde. Moderne Appliances sind ausgereifter und umfassen ein Funksystem. Wie die meisten modernen Computer, haben diese auch ein relativ komplexes Betriebssystem und können daher individuell durch Software (oder Firmware) konfiguriert werden, um eine Vielzahl von Vorgängen durchzuführen - sei es als Zusatz zu einer Telefonkomponente oder als ein vollständiger Computer, wobei eine Beschränkung lediglich in der Ausgestaltung des Benutzer-Interfaces besteht. Daher erstreckt sich die Personalisierung auf fast alle Aspekte des Computers, wobei Grenzen durch das Kommunikationsnetzwerk, wie beispielsweise die Anzahl der Vorgänge und die Kommunikationsprotokolle, gesetzt werden.

Eine Folge dieser Weiterentwicklung ist es, dass eine moderne Appliance derart viele veränderbare Parameter hat, dass ein normaler Benutzer nicht fähig ist, diese ordentlich zu konfigurieren und es bei der Ausführung der Appliance Inkonsistenzen geben wird, die in einer Enttäuschung resultieren können, was wiederum zu einer Nichtweiterverwendung der verfügbaren Dienste führen kann. Die Natur - die Mobilität - mobiler Geräte, unabhängig davon, ob es einfache Telefone, Smartphones oder Tablets sind - macht deren Verwaltung schwer. Der Ort der Verwendung der Appliance lässt sich nur schwer vorhersagen und muss dann geschätzt oder unter Verwendung einer oder mehrerer Ortungstechnologien approximiert werden. Des Weiteren kann sich der Benutzer der Geräte in einem sich bewegenden Fahrzeug befinden, während Updates wie Antivirus- und Sicherheits-Patches über eine drahtlose Verbindung durchgeführt werden. In den meisten Fällen werden die Arbeiten, die mit der Bereitstellung und Verwaltung mobiler Geräte verbunden sind, unter Verwendung von herstellerspezifischen Werkzeugen durchgeführt. Diese proprietären Lösungen haben wenig gemein, woraus das Bedürfnis nach einem einzigen "Werkzeug" resultiert, das die Bereitstellung unabhängig von dem spezifischen Gerät erlaubt.

Der Begriff "Geräteverwaltung" hat sich zu einem Sammelwort für eine Vielzahl von Werkzeugen entwickelt, die dazu verwendet werden, mobile Geräte zu konfigurieren, zu verwalten und zu aktualisieren. Die Einrichtung kann durch die Benutzer selbst unter einer gewissen Benutzer-Interaktion oder vollständig automatisch durchgeführt werden. Trotz des Vorhandenseins proprietärer Protokolle zur Verwaltung von Geräten unterschiedlicher Appliance-Hersteller und Dienstanbietern, fehlt ein industriell standardisiertes Geräteverwaltungsprotokoll. Es gibt Bedarf nach einem vollständig kompatiblen Werkzeugsatz, System und Verfahren zur Sicherstellung, dass neue Geräte für einen Endbenutzer so transparent wie möglich konfiguriert, bereitgestellt und verwaltet werden können.

Das Bedürfnis nach einer automatisierten Bereitstellung ist ebenso wie das nach Benutzerfreundlichkeit und Sicherheit bekannt. In der US 6 647 260 diskutiert Open Wave Systems Inc. eine Lösung, die es versucht, die Bedürfnisse des Markts zu dem gegebenen Zeitpunkt zu adressieren. Das System erfordert es, dass ein 2-Wegekommunikationsfähiges Mobilgerät dazu autorisiert wird, mit dem Netzwerk eine Verbindung herzustellen und dann einen Server zu kontaktieren, um den gesamten Prozess des Austausches von Berechtigungen und Konfigurationsdateien zu verwalten. Demgegenüber ist es bei der vorliegenden Erfindung nicht notwendig, einen Server zu kontaktieren, um die Appliance bereitzustellen.

Es ist Aufgabe der vorliegenden Erfindung, eine Möglichkeit zur einfachen und sicheren Konfiguration eines Betriebssystems für eine Appliance bereitzustellen. Insbesondere soll das Betriebssystem ohne das Vorhandensein einer Netzverbindung konfigurierbar sein

Die Aufgabe wird durch die Appliance gemäß Anspruch 1 und das Verfahren gemäß Anspruch 12 gelöst.
Insbesondere wird die Aufgabe durch eine Appliance gelöst, die umfasst:
- mindestens eine Kommunikationseinrichtung zur Funkkommunikation mit einem Netzwerk;
- mindestens eine Recheneinheit und mindestens einen Speicher zur Speicherung von Daten;
   wobei in dem Speicher mindestens zwei Firmwareabbilder und eine Datenstruktur gespeichert sind, die jedem der Firmwareabbilder mindestens einen Auslösezustand zuordnet, wobei ein Ladeprogramm im Speicher dazu ausgebildet ist:
   - nach dem Starten der Vorrichtung eine Liste von Ist-Zuständen der Appliance zu erstellen;
   - die Datenstruktur mit der Liste von Ist-Zuständen abzugleichen;
   - unter Berücksichtigung des Abgleichs ein Firmwareabbild auszuwählen und das ausgewählte Firmwareabbild zu laden.

Erfindungsgemäß kann mindestens eines der Firmwareabbilder ein vollständiges Firmwareabbild sein, das gebootet werden kann. Ebenso kann mindestens eines der Firmwareabbilder ein unvollständiges Firmwareabbild sein, das vor einem Booten noch weitere Daten benötigt, die beispielsweise über eine Kommunikationsverbindung heruntergeladen werden müssen. Die Datenstruktur ermöglicht es ohne das Herunterladen von weiteren Dateien, ein Firmwareabbild für den Konfigurationsprozess auszuwählen. Hierbei werden Auslösezustände bzw. Auslöser oder Auslöseereignisse berücksichtigt. Mit der Datenstruktur ist es möglich, sehr komplexe Bedingungen zu konfigurieren, die zur Auswahl eines bestimmten Firmwareabbilds führen.

In einer Ausführungsform kauft oder erhält ein Benutzer eine mobile oder drahtlos verbindbare Appliance, die mit einer eindeutigen Identifikation ausgestattet ist. Diese Identifikation kann eine Seriennummer oder einen anderen Identifizierer oder eine Kombination von mehreren Identifizierern umfassen, die eindeutig ist. Ein gängiges Beispiel von eindeutigen Adressen für kommunikationsfähige Appliances ist deren MAC (Media Access Control)-Adresse. Die Kombination einer derartigen MAC-Adresse mit einer Seriennummer kann in einer großen Anzahl von adressierbaren Einheiten resultieren. Sobald ein Benutzer die Appliance anschaltet, kann die Appliance zunächst eine Firmware laden und von dieser booten, wobei die Firmware dazu verwendet werden kann, die Appliance zu aktivieren und zu konfigurieren. Diese Firmware - anmeldungsgemäß auch als Ladeprogramm bezeichnet - kann ein Teil der Betriebsfirmware der Appliance sein, oder sie kann Aspekte umfassen, die diese veranlassen, Funktionen durchzuführen, die sich auf die initiale Konfiguration beziehen, wobei diese Aspekte hiernach im normalen Betrieb verändert, deaktiviert oder maskiert werden. Diese Firmware kann Informationen bezüglich Ist-Zuständen von einer Vielzahl von Quellen sammeln und kann diese Informationen nutzen, um den Aktivierungs- und Konfigurationsprozess auszulösen. Im Laufe des Aktivierungsprozesses kann die Appliance Zugriff auf weitere Informationen erlangen, die verwendet werden können, um die Appliance zu konfigurieren oder erneut zu konfigurieren. Wenn beispielsweise ähnliche Konfigurationen durch andere Appliances aktiviert wurden und die Appliance dies entdeckt, können statt einem einfachen Laden der bestimmten Konfiguration lediglich die Unterschiede geladen werden, so dass der Prozess beschleunigt wird. In einer Ausführungsform werden Informationen bezüglich der Betriebsparameter gesammelt und diese Parameter werden mit einer vorgeladenen Konfiguration besetzt, bevor die Appliance den üblichen Betrieb aufnimmt. Beispielsweise kann eine vordefinierte Konfiguration von der Appliance geladen werden und eine Nachschlagetabelle (=Lookup-Tabelle) mit bestimmten voreingestellten Parametern unter Verwendung der neuen Parameterwerte verändert werden, die in dem Zeitraum vor dem normalen Betrieb gesammelt werden, wobei die Parameter/Parameterwerte von der Appliance verwendet werden, um zu bestimmen, ob ähnliche Konfigurationen existieren. Benutzer-Interaktion kann in einer Vielzahl von Wegen festgelegt werden. Ein Benutzer kann beispielsweise vollständig von den Konfigurationsmöglichkeiten der Appliance isoliert sein oder kann einen uneingeschränkten Zugriff erhalten. Allgemein kann die Benutzer-Interaktion auf das niedrigste Niveau gesetzt werden, das es erlaubt, eine erfolgreiche Konfiguration zu erwirken, so dass der Prozess für den Benutzer so transparent wird. Benutzerschnittstellen können listenbasierte Menüs und/oder soundbasierte Menüs und/oder grafische Schnittstellen in Verbindung mit einem oder mehreren Knöpfen, Keypads oder Touchscreens oder eine Kombination von Schnittstellen, die an akustische Aufrufe gekoppelt sind, sein. Es muss festgestellt werden, dass die akustische Interaktion auch Spracherkennung als Schnittstellentechnologie umfassen kann. In einer Ausführungsform wird eine tonbasierte Schnittstelle für sehbeeinträchtigte Benutzer bereitgestellt. In einer anderen Ausführungsform ist die Benutzereingabe auf einen einzigen Schalterverschlussmechanismus, wie beispielsweise einen Knopf, reduziert, und dessen Eingabezustände bezüglich der Zeit bestimmen bzw. beeinflussen die Aktionen der Appliance. Das Herunterhalten des Knopfes kann dazu führen, dass der Zustand der Appliance in den nächsten möglichen Zustand übergeht, bis der gewünschte Zustand erreicht wird. Alternativ kann der Knopf mehrfach gedrückt werden, um unterschiedliche Zustände zu erreichen.

Obwohl es möglich ist, alle möglichen Konfigurationsvarianten in Speicherabbildern der Firmware, die vollständig im Speicher der Appliance gespeichert sind, zu speichern, diese von diesen zu sammeln und zu laden, können neuere oder aktualisierte Versionen der Firmware und der Dienste angefordert werden, die zu dem Zeitpunkt, zu dem das Speicherabbild ursprünglich erzeugt und gespeichert wurde, nicht verfügbar waren, um es der Appliance zu ermöglichen, ordentlich konfiguriert zu werden, um gegebene (Dienst-) Anforderungen zu erfüllen. Derartige weiterführende Informationen können erforderlich sein, um eine ordentliche Dienstausführung eines oder mehrerer Elemente der Appliance zu gewährleisten. Daher kann es sein, dass die Appliance initial auf einem niedrigeren Niveau konfiguriert wird und dann der endgültige Zustand der Konfiguration und eine Aktualisierung der Appliance im Hintergrund zu einem Zeitpunkt, wenn weitere Informationen verfügbar werden, erreicht wird.

Sobald die Aktivierung abgeschlossen ist und die Appliance derart konfiguriert ist, dass diese ordentlich funktioniert, kann ein Benutzer in bestimmten Fällen weitere Prozesse aufrufen, um die Konfiguration der Appliance zu modifizieren. Weitere Prozesse können auch seitens des Systems in Reaktion auf aus dem Netzwerk oder aus Netzwerken gesammelten Daten autorisiert und ausgeführt werden. Diese Daten können der Appliance ohne Interaktion mit dem Benutzer, beispielsweise periodisch, angeboten werden. Zusätzlich oder alternativ können diese Daten abgefragt werden. Die Abfrage kann durch einen Benutzer angestoßen werden, soweit ein entsprechender Prozess existiert.

Durch die Verringerung des Bedarfs an technischer Unterstützung und die Automatisierung des Konfigurationsprozesses, soweit dies praktisch ist, können die personellen Anforderungen des Herstellers und des Distributors reduziert werden. Des Weiteren kann mit der zunehmenden Verfügbarkeit von verbundenen Appliances, die fähig sind, in einer Vielzahl von Systemen zu arbeiten, die Re-Konfiguration für die Kompatibilität mit unterschiedlichen Systemanforderungen mit einer minimalen Störung des Benutzers erreicht werden. Zusätzlich können weitere Appliance-Funktionalitäten bedient werden, wenn diese Appliances zu einem späteren Zeitpunkt verändert werden oder die zusätzlichen Funktionalitäten hinzugefügt werden.

### Figurenauflistung

Fig. 1 zeigt die Grundsequenz des Arbeitsablaufs der Erfindung.
Fig. 2 zeigt eine Anordnung einer Auslöseliste oder -Struktur und stellt einen Bezug zu der Grundsequenz aus Fig. 1 her.

### Detailbeschreibung der Erfindung

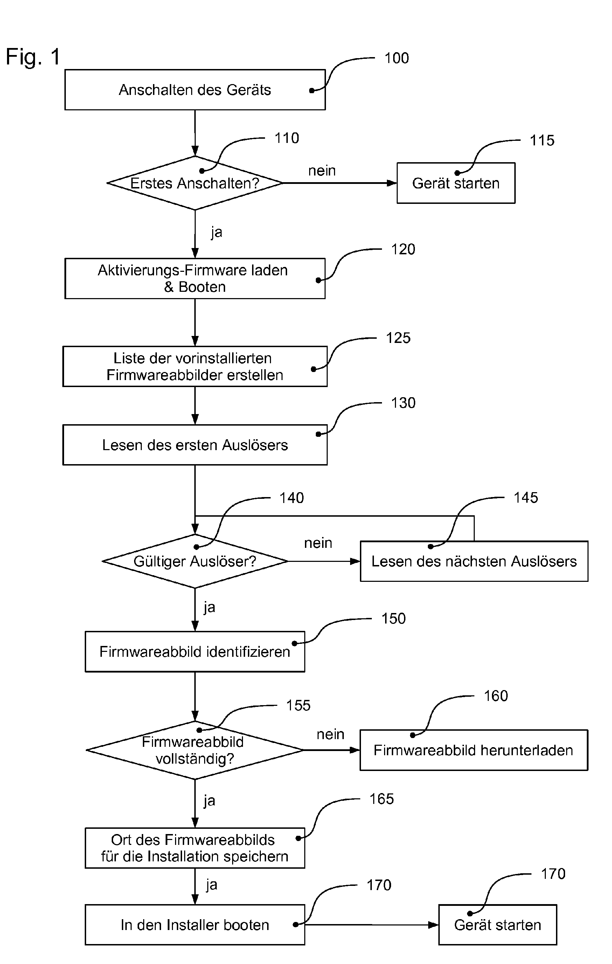

Gemäß Fig. 1 geht das Flussdiagramm davon aus, dass der Prozess beginnt, wenn die Appliance das erste Mal angeschaltet wird, 100. Zu diesem Zeitpunkt sollte die mobile Appliance von dem Netzwerk identifizierbar sein und kann bereits eine Subscriber-Identität haben, wobei eine SIM-Card oder SIM oder etwas Vergleichbares installiert ist. Es wird davon ausgegangen, dass das Netzwerk mit dem Appliance verbunden ist und eine Subscriber-Identität hat, die bereits als anhängiger Subscriber für eine Appliance markiert ist, die auf ihre Konfiguration und Aktivierung wartet. Es sollte erwähnt werden, dass die Subscriber-Identität eine Voraussetzung für das ordentliche Funktionieren von mobilen oder verbundenen Appliances ist und dass jede Appliance eine eindeutige ID benötigt. Diese eindeutige ID kann in einer Vielzahl von Arten generiert werden; frühere Mobiltelefone verwendeten eine einfache elektronische Seriennummer, die sequentiell generiert wurde, wobei es sich jedoch gezeigt hat, dass dieser Ansatz nicht angemessen war. Systeme, die CDMA-Netzwerke nutzen, können eine hart kodierte, gerätespezifische ID haben, die eindeutig ist, und diese als Subscriber-ID nutzen. In einigen Netzwerken kann diese ID jedoch in einem tragbaren Modul enthalten sein und sich daher mit dem Benutzer von Appliance zu Appliance bewegen, wobei die ID nicht davon abhängt, in welche Appliance das Modul installiert ist. Allgemein sind SIMs als Teil der Inventar-Verwaltung des Dienstanbieters vorgesehen. Insofern können diese bereits einem oder mehreren Dienstangebotsmöglichkeiten vor ihrer Verteilung unter der Benutzergemeinschaft zugeordnet sein. Dies bedeutet, dass der wesentliche Schritt die Kontaktaufnahme der Appliance mit dem Netzwerk alles ist, was notwendig ist, um eine SIM zu autorisieren. Jedoch ist die SIM-Validierung ein relativ kleiner Bestandteil der Dienstzuordnung zu einer bestimmten Appliance und die vorliegende Erfindung konzentriert sich auf den Aspekt der Appliance-Konfiguration, die ohne die Notwendigkeit der Netzwerkverbindung erfolgt. In einem Ausführungsbeispiel wird eine Appliance ohne eine eindeutige ID von einem drahtlosen Dienst zur initialen Konfiguration erkannt, wobei eine nachfolgende Verbindung die Erzeugung einer Subscription und einer angemessenen Identifizierungskomponente erfordert.

Das Anschalten der Appliance sorgt dafür, dass die Appliance-ID - eine SIM-Karte oder eine ähnliche Funktion - gelesen wird, wobei die Identität der Appliance für das beabsichtigte Netzwerk oder die beabsichtigten Netzwerke definiert wird; soweit keine angemessene Identifikation, wie z.B. eine ordentlich formatierte SIM-Karte (oder eine vergleichbare Identifikationsquelle) vorhanden ist, wird die Appliance nicht mit dem nächsten Schritt fortfahren und einen Alarm für den Benutzer anzeigen, der die Einführung einer geeigneten SIM-Karte oder eine Bestätigung einer Appliance-Identität fordert. Wenn die Identifikationsinformation mit den vorgegebenen Netzwerkanforderungen übereinstimmt, kann die Appliance den Benutzer informieren, dass eine grundsätzliche Funktionsfähigkeit erreicht wurde. Jedoch kann die Appliance bezüglich ihrer Leistung beschränkt sein, bis die unterschiedlichen Softwarekomponenten installiert sind, die die Vielzahl von Funktionen einer modernen funkverbundenen Appliance ermöglichen.

Sobald es der Appliance möglich ist, über die Identifikationsüberprüfungsstufe fortzuschreiten, kann die Appliance den Konfigurationsprozess durch das Laden von Software beginnen, die die Appliance befähigt, mit den Aufgaben der Konfiguration selbst fortzufahren. Eine Appliance, die das erste Mal 110 angeschaltet wird, kann den Konfigurationsprozess aufrufen. Wenn die Appliance das nächste Mal zu einem folgenden Zeitpunkt angeschaltet wird, ist dieser Schritt nicht erforderlich und die Appliance kann normal starten (Schritt 115). Wenn eine Appliance nicht fähig ist, die Identität zu definieren und/oder zu validieren, wird sie üblicherweise anhalten, wobei diese Erfindung unabhängig von dem Ergebnis dieses Schrittes durchgeführt werden kann. Die Konfiguration kann in dem Appliance-Speicher, in Teilen des Appliance-Speichers oder anderswo angesiedelt sein. Im erstgenannten Fall, bei dem es sich um den bevorzugten Fall handelt, da eine sehr geringe Betriebsfirmware-Konfiguration geladen werden muss, kann die Konfigurationssoftware zum Zeitpunkt der Herstellung entweder als Standalone-Softwarekomponente oder als Teil des Betriebssystemabbilds, das auf die Appliance geschoben und dort gespeichert wird, geladen werden. Beim ersten Anschalten 110, kann die erfolgreiche Bestätigung/Validierung der Identität diese Konfigurationssoftware 120 aufrufen, wobei die Appliance die Software laden wird, die die Konfiguration der Appliance verwaltet. Im zweiten Fall, kann die Konfigurationssoftware teilweise in dem Appliance-Speicher geladen sein - wiederum zu dem Zeitpunkt des Herstellungsprozesses, wenn diese Software für die Appliance in den Appliance-Speicher verschoben wird. Die Software kann nur in Reaktion auf einen bestimmten Autorisierungsschlüssel aufgerufen werden. Dieser Schlüssel, wenn notwendig, kann manuell von einem Benutzer oder automatisch als Teil der Bestätigung der Identität der Appliance eingegeben werden oder entfernt aufgefunden werden, wobei ein Zugriff durch die Appliance in Reaktion auf eine initiale Verbindung mit dem drahtlosen Dienstnetzwerk erfolgt. Dieses Netzwerk kann jedes der drahtlosen Dienste sein, mit der sich die Appliance verbinden kann. Ein drahtloser Dienst kann ein Dienst wie drahtlose Telefonie oder Datenzugriff, ein lokaler Dienst wie beispielsweise WIFI oder eine Bluetooth-Verbindung, sein, die einen entfernten Dienst über ein dazwischenliegendes Gerät wie beispielsweise ein Mobiltelefon oder einen drahtlosen Hotspot erreicht. In dem Fall von Appliances, die keine regelmäßige oder verlässliche Verbindung erfordern, kann die Verwendung von Kommunikationseinrichtungen aus der Kurzstreckentechnologie einige Vorteile, wie beispielsweise eine verbesserte Sicherheit, bereitstellen.

In dem dritten Beispiel, in dem eine verlässliche Verbindung erreicht werden kann, kann die Konfigurationssoftware auf Anfrage von der Appliance heruntergeladen werden oder andernfalls durch den Dienstanbieter/Serviceprovider des verbundenen Netzwerks oder dem Carrier zu der Appliance "gepusht" werden. In diesem Fall muss die Appliance dem entfernten Dienst ausreichende Informationen bereitstellen, damit dies passieren kann. Die entfernte Verbindung kann unter Verwendung jeder der Merkmale oder Funktionalitäten der Appliance etabliert werden. Beispielsweise kann dies unter Verwendung eines Mobilfunknetzwerkes, eines lokalen drahtlosen Netzwerkes wie beispielsweise WIFI oder durch jedes andere Mittel, das der Appliance zur Verfügung steht, erreicht werden. Wenn die Konfigurationssoftware oder -Firmware aus der Ferne bereitgestellt wird, wird sie üblicherweise nach der vollständigen Ausführung deaktiviert oder gelöscht, so dass eine wohldefinierte Interaktion zur Veränderung der Konfiguration in der Zukunft notwendig ist und so dass keine Veränderung irrtümlich oder autonom von der Appliance durchgeführt werden kann.

Sobald die Appliance die notwendige Konfigurationssoftware geladen und aufgerufen hat, wird der Konfigurations- und Aktivierungsprozess solange ausgeführt, bis die Appliance ordentlich konfiguriert ist. Dieser Prozess kann einige oder keine Interaktion mit dem Benutzer erfordern. Dies hängt von der Art der Appliance und der Anzahl von Auswahlmöglichkeiten ab. Die Benutzer-Interaktion kann so einfach sein wie das Betätigen eines Knopfes oder etwas Ähnliches, um die Benutzerzustimmung zu signalisieren. Als Teil der Verwaltungssoftware oder -Firmware auf der Appliance kann jeder Softwarekomponente wie beispielsweise einem Programm, einem Plug-in oder einem Unterprogramm, eine Identifikation oder eine Seriennummer zugeordnet sein. Die erste Aufgabe, die von dem Konfigurationsprogramm bei der Generierung der Konfiguration durchgeführt wird, kann das Sammeln der eindeutigen Identifikationsinformationen von einigen oder allen vorinstallierten Softwarekomponenten sein, die in dem Speicher der Appliance residieren (Schritt 125 aus Fig. 1). In einem Ausführungsbeispiel der Erfindung, wird die Identifikation jeder Softwarekomponente oder - Elements in einer Liste aufgezeigt. Diese Liste kann persistent sein oder nach dem Abschluss des Konfigurationsprozesses gelöscht werden. Sobald die Informationen für die Appliance verfügbar sind, kann die Appliance die Methode bestimmen, mittels derer die Konfiguration generiert wird, so dass die Appliance aktiviert wird.

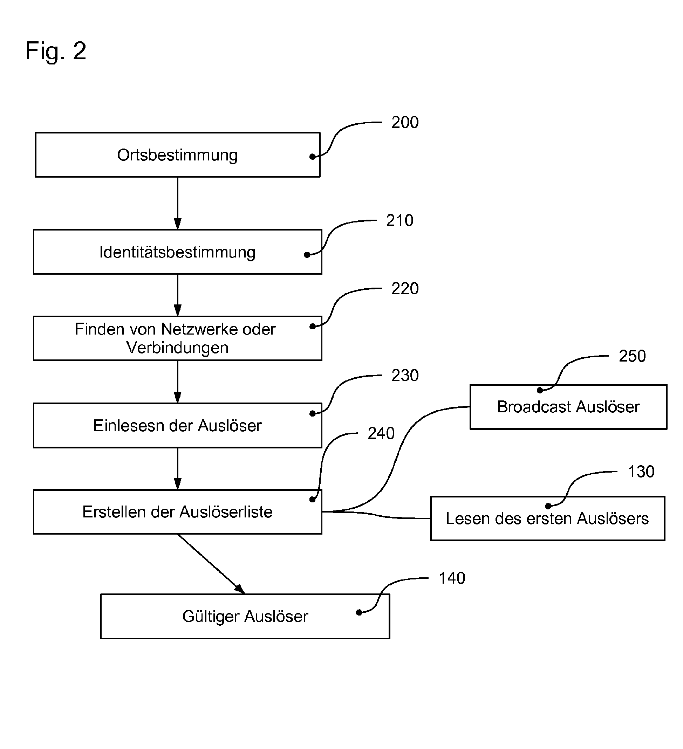

Wie in Fig. 2 gezeigt, kann die Auswahl einer bestimmten zu ladenden Konfiguration durch einen Ort, umfassend einen implizierten Ort, der vorbestimmt und lokal in der Appliance gespeichert ist und/oder sichtbare Netzwerke und/oder verbundene Netzwerke und/oder Informationen, die auf einer SIM-Card basieren und/oder eine Appliance-Identität und/oder Benutzerinformationen ausgelöst werden. Zusätzlich zu den sichtbaren Netzwerken sollte es klar sein, dass die Aufzählung (individuelle) Broadcast-Signale oder Beacons umfasst, die empfangen werden und Rückschluss auf einen Ort oder eine Ortsangabe ermöglichen. Beispielsweise kann ein Bluetooth-Signal als Broadcast versandt werden, das Informationen enthält, die gespeichert und von der Appliance verwendet werden. Da das Auslösen der Konfiguration durch ein einziges oder eine Vielzahl von Ereignissen (=Events) erfolgen kann, ist die Figur für ihre leichte Verständlichkeit stark vereinfacht und es wurde kein Aufwand betrieben, alle Möglichkeiten zu entwickeln. Das Lesen des ersten Auslösers/Triggers in der Liste oder Struktur erfolgt in Fig. 1 im Schritt 130 und erfolgt basierend auf der Liste, die in Schritt 240 - Erzeugung einer Liste von Auslösern - der Fig. 2 ausgegeben wird. Das Resultat - der bestimmte Auslöser - wird dann zu dem Validierungsschritt 140 der Fig. 1 weitergegeben. Der Ort 200 kann ein Resultat einer positiven Ortsbestimmung, beispielsweise basierend auf einem GPS-Signal, sein oder kann eine einfache Regionsangabe sein, die von dem Benutzer eingegeben wurde. Beispielsweise kann ein Benutzer eine ITU-Region (ITU: International Telecommunication Union) durch das Klicken eines Knopfes angeben: 1 Klick = Region 1 (Europa), 2 Klick = Region 2 (Amerika), 3 Klick = Region 3 (Asien). Die Identität 210 kann aus einer vorher zugeordneten Seriennummer, einer Service-Subscriber-ID wie beispielsweise einer SIM-Karte, einer Sequenz von Eingaben, die automatisch von einem Dienstzugangspunkt (Service Access Point) bezogen werden, oder einem vom Benutzer eingegebenen Code erzeugt werden. In dem beschriebenen Fall wird in Schritt 220 eine Verbindung zu einem Dienstzugangspunkt hergestellt, wenn dieser verfügbar ist, unabhängig von dem Ergebnis jeder der vorhergehenden Schritte. Es ist wohlbekannt, dass die Zeit als eine Beschränkung bzw. Abbruchskriterium für jegliche Aufgabe genutzt werden kann und es wird angenommen, dass der Prozess stets terminiert, wobei dies unabhängig von der Ausgabe bzw. dem Ergebnis jedes der Schritte erfolgt. Vorgeladene Auslöser-Informationen können bereits vorhanden sein 230 und diese können genutzt werden, wenn die Liste oder Struktur mit den Auslöserdaten erzeugt wird (vgl. Schritt 240). Die Auslöser-Reihenfolge ist eine Frage des Designs, wobei jedoch vorgegebene bzw. vorgespeicherte Auslöserdaten in vielen Fällen bevorzugt werden.

In einer komplexeren Ausführungsform ist es möglich dann, wenn die Appliance eine gewisse Kombination von Signalen wahrnimmt, die mit anderen Informationen, wie beispielsweise einer bestimmten SIM-Karte oder Identifikationsinformationen, verbunden sind, festzustellen, dass eine bestimmte Konfigurationseinstellung nicht unterstützt wird, wobei eine andere gut arbeiten wird. In einer Ausführungsform wird der Auslöser für die Konfiguration von Daten abgeleitet, die in die Appliance unter Verwendung eines Annäherungssystems eingelesen werden. In diesem System kann ein Nahfeld-Kommunikationssystem (NFC-System oder Near-Field-Communication-System) dazu ausgebildet sein, um Datensequenzen an eine Komponente, beispielsweise einen EEPROM, zu liefern, die einem (NFC-)Feld ausgesetzt ist, wobei die Komponente später beim ersten Anschalten von der Appliance ausgelesen werden kann. Diese NFC-adressierbaren Komponenten werden häufig verwendet und können in einer Vielzahl von RFID-Appliances gefunden werden. Beispielsweise kann, wenn die Appliance durch Dritte wie beispielsweise einem Postdienst ausgeliefert wird, die Adresse des Empfängers verwendet werden, um die Informationen für den Auslöser zu bestimmen, die dann durch das NFC-System in die Appliance geladen werden; besser noch, kann das beabsichtigte endgültige Ziel der Appliance genutzt werden, da dies der Ort ist, an dem die Appliance das erste Mal angeschaltet wird. Sobald die Verteilungssoftware, die verwendet wird, um den Versand zu verwalten, das beabsichtigte Ziel erkennt, kann das NFC-System Daten als Informationssequenz von dem Versandsystem annehmen und, wenn die Appliance nahe dem NFC-System platziert wird, die empfangenen Daten in die NFC-adressierbare Komponente in der Appliance schreiben. Diese Informationen können nachfolgend von der Appliance beim (ersten) Einschalten gelesen werden. Die Daten werden zu dem Auslöser, der es der Appliance erlaubt, die angemessene Firmware zu ermitteln und zu laden, so dass die Appliance automatisch zu Verwendung konfiguriert werden kann. Der NFC-Transmitter überträgt durch das einfache Aussetzen der Appliance gegenüber dem Transmitter innerhalb eines vorgegebenen Bereichs oder einer vorgegebenen Distanz, wobei keine physikalische Verbindung notwendig ist. Eine Vielzahl von Auslösern kann als Liste mit einer bevorzugten Ordnung gespeichert sein, wenn die Möglichkeit existiert, dass ein einziger Auslöser nicht effektiv ist.

Gemäß Fig. 1 kann, zumindest beim ersten Anschaltereignis, sobald die Appliance bereit ist, die Konfigurationsaufgabe durchzuführen, ein Auslöser aus der Liste von Auslösern 130 ausgewählt und getestet werden, um zu bestimmen, ob dieser Auslöser 140 gültig ist. Die Gültigkeitsprüfung kann geschehen, indem die Auslöserstruktur, beispielsweise mittels eines Parsers, analysiert wird, um sicherzustellen, dass der Auslöser einer Auslöserstruktur aus einer Liste von möglichen Auslöserstrukturen entspricht, und indem eine gültige Identifikationssequenz/Identifikationskennung gesucht wird, die möglicherweise eine Software- oder Firmwareabbild angibt bzw. identifiziert. Die Struktur, die einen Auslöser repräsentiert kann allgemein derart ausgestaltet sein, dass sie zumindest eine gültige Referenz auf eine gespeicherte Konfiguration und eine beliebige Referenz zu der Appliance selbst, wie beispielsweise einen Identifizierer und eine Ortsangabe/Adressangabe, umfasst. Wenn ein Auslöser diesen Test nicht erfolgreich absolviert, da er nicht mit einer gültigen Identifikationssequenz übereinstimmt, wird der nächste Auslöser in der Liste von möglichen Auslösern ausgewählt 145 und der Test wiederholt. Dieser Prozess kann so oft wie notwendig wiederholt werden, bis entweder ein gültiger Auslöser gefunden wird oder die Liste erschöpft ist. Ein gültiger Auslöser korrespondiert mit einer vorgeladenen Software- oder Firmware-Komponente und der Ort dieser Komponente kann erfasst (Schritt 150) und dann überprüft werden, um zu sehen, ob es ein vollständiger Eintrag ist (Schritt 155). Wenn sie vollständig ist, kann der Eintrag in einer Art gespeichert werden, die es erlaubt, sie zu installieren. Wenn der Eintrag unvollständig ist, wie beispielsweise in einem Fall, wenn die Version veraltet ist, kann die Appliance eine Netzwerkverbindung aufrufen, um eine vollständige oder aktuelle Version zu erhalten (Schritt 160), und dann diese Version an einem Ort für eine spätere Installation speichern (Schritt 165). Sobald die Konfiguration vorbereitet ist, bootet die Aktivierungsfirmware zu dem Installer (Schritt 170), der dann die Konfigurationssoftware oder -Firmware ordentlich installiert und durch ein normales Starten der Appliance endet (Schritt 180).

Wenn kein gültiger Auslöser verfügbar ist, kann die Appliance dem Benutzer diese Informationen mit Möglichkeiten zur Lösung des Problems bereitstellen. Wenn die Appliance das Fehlen des Auslösers nicht lösen kann oder nicht automatisch eine neue und gültige Auslöserinformation finden kann, kann die Appliance zu einer Standardkonfiguration zurückkehren, die es nachfolgend dem Benutzer erlaubt zu intervenieren, so dass die Konfigurationseinstellungen angepasst werden können. Bei dem Beispiel, bei dem in Schritt 150 keine vorgeladene Software bereitstand, die zu dem Auslöser passt, kann ein automatischer Versuch unternommen werden, einen passenden Konfigurationskandidaten zu finden. In einer Implementierung, wie in dem Beispiel, in dem die ITU-Regionen eingegeben werden (Absatz [0021]) kann die Benutzer-Intervention eine Auswahlliste von geografischen Regionen umfassen, so dass die Grundkonfiguration zumindest regional angepasst ist. Dort, wo regionale Varianten die Konfigurationsresultate beeinflussen, beispielsweise wenn mehrere Sprachen, wie in der Schweiz, verwendet werden, kann der Benutzer aufgefordert werden, seine bevorzugte Variante auszuwählen. Ein gültiger Auslöser wird zumindest eine gültige Firmware-ID umfassen und wenn dies der Fall ist, kann das Konfigurationsprogramm durch die vorhergehend gesammelte Auflistung von Firmware-IDs gehen, die vorher in dem Appliance-Softwareabbild gespeichert waren und eine Aufzeichnung deren Orte für eine spätere Verwendung generieren (Schritt 200).

In der Realität kann es einem Auslöser misslingen, die Appliance zu aktivieren. Obwohl es viele Gründe geben kann, die einen erfolgreichen Abschluss der Aktivierung verhindern können, sollte der Benutzer vorzugsweise mit einer ausführbaren Appliance zurückgelassen werden, auch wenn diese auf einem sehr geringen Niveau konfiguriert ist. Da die Auslöser als einzige Elemente oder Kombinationen von simultanen oder sequentiellen Events/Ereignissen, wie beispielsweise die Fähigkeit, Signale a) von einem Heimdienstanbieter wie in einer SIM-Struktur definiert (im Fall einer Mobilfunk-verbundenen Appliance) und b) an einem bestimmten Ort, der mit einem bekannten, durch eine Mobilfunkzelle vorgegebenen Ort übereinstimmt, zu empfangen, definiert sein kann, wird es bevorzugt, dass die Auslöser eine vorgegebene Ordnung und Struktur haben, die es der Appliance erlauben, einen Auslöser zu testen und, im Falle des Fehlens einer ordentlichen Antwort auf den Auslösertest, zu dem nächsten Auslöserkandidat in der gegebenen Ordnung vorzurücken. Diese Auslöserordnung kann in einer Vielzahl von Wegen vordefiniert sein. Die Auslöserordnung kann beispielsweise durch eine SIM-Card, durch Informationen, die im Speicher der Appliance gespeichert sind, definiert sein, oder sie kann von einer externen Quelle zum Zeitpunkt des Aktivierungsversuchs oder der Aktivierungsversuche abgeleitet werden. Beispielsweise kann ein empfangenes Broadcast-Signal 250 einen Auslöser enthalten, der von der Appliance genutzt wird, statt dass diese mit einer Liste von möglichen Auslösern fortfährt. Es sollte klar sein, dass zumindest ein Auslöser lokal in der Appliance gespeichert werden kann, um sicherzustellen, dass der Aktivierungsprozess in dem Fall, in dem andere Informationen nicht verfügbar sind, beispielsweise wenn eine Appliance in einer netzwerkfreien Zone, wie einem Keller, angeschaltet wird, fortgesetzt werden kann. Dieser lokale Auslöser kann einer Konfiguration zugeordnet sein, die die Standard-Installation, als letzte Alternative, wird, so dass die Appliance beim ersten Anschalten immer in einen ausführbaren Zustand übergeht, wobei Vorkehrungen getroffen werden können, die eine Dienstanfrage erlauben, die eine automatische Re-Konfiguration zum einem späteren Zeitpunkt erlaubt. Es kann auch wünschenswert sein, die Konfiguration der Appliance auf einen erwarteten geografischen Ort entweder vollständig oder in Verbindung mit Informationen aus der SIM-Karte basieren zu lassen, so dass die Appliance unabhängig von jeglicher Verbindung konfiguriert und aktiviert wird.

Bezüglich der Fälle, bei denen keine eindeutige Firmware-Identifikation in Reaktion auf den Auslöser vorhanden ist, kann die Appliance bestimmen, dass ein eindeutiger Identifizierer unter Verwendung von externen Informationen erstellt wird. In einem Ausführungsbeispiel kann der geografische Ort durch einen in die Appliance eingebauten GPS-Empfänger bestimmt werden. In einem anderen Ausführungsbeispiel kann der Benutzer einen regionalen Ort durch das Auswählen einer nahegelegenen Position aus einer Auswahl, die von der Appliance bereitgestellt wird, auswählen. Diese Information kann einer oder mehreren bestimmten Informationsmarken zugeordnet werden und diese Informationsmarken können derart geordnet werden, dass die Appliance bestimmen kann, welche Firmware oder Software geladen werden soll, um die erforderliche Konfiguration der Appliance zu ermöglichen. Diese Informationen können dann, üblicherweise als Adresse oder Referenz auf eine Adresse, gespeichert werden, so dass dann, wenn die Appliance nach dem Abschluss der Konfigurationsprozessaufgaben startet, dies in einer Art erledigt wird, die es erlaubt, die Konfigurations-Firmware in die Betriebssystemspeicherbereiche zu laden.

In einigen Fällen kann es der Appliance nicht möglich sein, ein angemessenes vorinstalliertes Firmwareabbild zu bestimmen. In diesen Fällen kann eine Entscheidung erforderlich sein, die es einem Benutzer erlaubt, zu intervenieren, um die Appliance in einen ausführbaren Zustand zu versetzen. Beispielsweise kann ein geeigneter Parametersatz für eine geografische Region, für die kein geeignetes Firmwareabbild existiert, generiert werden, und dieser Parametersatz kann verwendet werden, um im Speicher der Appliance ein Firmwareabbild zu modifizieren. Wenn eine Netzwerkverbindung einer beliebigen Art verfügbar ist, kann sich die Appliance automatisch verbinden und versuchen, auf einem oder mehreren Servern ein geeignetes Firmwareabbild zu finden. Abhängig von der Architektur der Appliance selbst kann es jedoch notwendig sein, ein Standardabbild zu installieren, so dass zumindest die Netzwerkzugriffsdienste vor deren Aufruf installiert und bereitgestellt werden, so dass eine gewünschte Konfigurationssoftware oder -Firmware gefunden werden kann. Obwohl der Konfigurationsprozess ohne das Hinzuziehen des Benutzers durchgeführt werden kann, so dass dieser keine Kenntnis von dessen Aktivitäten haben kann, wird es bevorzugt, dass der Benutzer über die Fortschritte der Konfigurationsaktivitäten der Appliance informiert wird, wenn Probleme auftreten. In diesen Fällen kann es sein, dass es für den Benutzer so aussieht, als wäre die Appliance inaktiv. Es ist wesentlich, dem Benutzer ausreichende Informationen bereitzustellen, um diesen davon abzuhalten, die Appliance abzuschalten oder diese neu zu starten, da dies zu einem kritischen Zeitpunkt während der Ausführung der Appliance passieren kann, wodurch eine ordentliche Installation der Appliance verhindert werden kann. Ein Ausschalten zu einem schlechten Zeitpunkt während der Programm-Ladeaktivität kann den Speicher der Appliance beschädigen und die Appliance langfristig deaktivieren, so dass diese Situation vermieden werden muss. In einem Ausführungsbeispiel wird der Batteriestatus überwacht und dann, wenn der Batteriestatus unter eine vorgegebene Grenze fällt, die Prozesse in einer sicheren Weise ausgesetzt, so dass diese zu einem späteren Zeitpunkt, wenn ausreichend Energie zur Verfügung steht, fortgesetzt werden können.

Die Appliance kann die Schritte des Auslösens und Sammelns von Informationen wiederholen, bis sie den Ort der zu installierenden Software (oder eine Liste von Orten) bestimmt hat und kann dann, wenn das Firmwareabbild in die Arbeitsposition im Speicher kopiert wurde, in das Betriebssystem mit den im Speicher gespeicherten notwendigen Information booten. In einem Ausführungsbeispiel der Erfindung wendet das Betriebssystem ein Systemwiederherstellungsmodul an, so dass die notwendige Firmware oder Aktualisierungen der existierenden Firmware aus gespeicherten Orten geholt und als Teil einer Neustart-Sequenz der Appliance installiert werden kann. Sobald der Installationsprozess abgeschlossen ist, kann die Appliance dann in ihre endgültige Konfiguration booten. Obwohl die Benennung der Prozesse für das Neustarten der Appliances variieren kann, kann das genannte Wiederherstellungssystem eine einfache Variante sein, die in den Appliances gefunden werden kann, die auf dem Android™-Betriebssystem basieren.

## Patentansprüche

1. Appliance, insbesondere Mobiltelefon, umfassend:
- mindestens eine Kommunikationseinrichtung zur Funkkommunikation mit einem Netzwerk;
- mindestens eine Recheneinheit und mindestens einen Speicher zur Speicherung von Daten;
**dadurch gekennzeichnet, dass**
in dem Speicher mindestens zwei Firmwareabbilder und eine Datenstruktur gespeichert sind, die jedem der Firmwareabbilder mindestens einen Auslösezustand zuordnet, wobei ein Ladeprogramm im Speicher dazu ausgebildet ist:
- nach dem Starten der Vorrichtung eine Liste von Ist-Zuständen der Appliance zu erstellen;
- die Datenstruktur mit der Liste von Ist-Zuständen abzugleichen;
- unter Berücksichtigung des Abgleichs ein Firmwareabbild auszuwählen und das ausgewählte Firmwareabbild zu laden.

2. Appliance nach Anspruch 1,
**dadurch gekennzeichnet, dass**
die Datenstruktur mindestens einen Eintrag mit mindestens einem Auslösezustand umfasst, der angibt, dass ein Firmwareabbild über das Netzwerk heruntergeladen werden muss.

3. Appliance nach einem der vorhergehenden Ansprüche,
**dadurch gekennzeichnet, dass**
das Ladeprogramm dazu ausgebildet ist, für das Herunterladen des Firmwareabbilds aus dem Netzwerk ein Firmwareabbild aus dem Speicher auszuwählen und in dieses zu booten.

4. Appliance nach einem der vorhergehenden Ansprüche,
**dadurch gekennzeichnet, dass**
mindestens ein Firmwareabbild im Speicher ein Standard-Firmwareabbild mit Treibern zur Herstellung einer Kommunikationsverbindung über das Netzwerk umfasst.

5. Appliance nach einem der vorhergehenden Ansprüche,
**dadurch gekennzeichnet, dass**
jedem Firmwareabbild eine eindeutige alphanumerische Identifikationskennung zugeordnet ist.

6. Appliance nach einem der vorhergehenden Ansprüche,
**dadurch gekennzeichnet, dass**
die Datenstruktur eine Ordnung hat und das Ladeprogramm dazu ausgebildet ist, in der durch die Ordnung vorgegebenen Reihenfolge die Auslösezustände des jeweiligen Firmwareabbilds mit der Liste von Ist-Zuständen zu vergleichen, wobei das Firmwareabbild zum Laden ausgewählt wird, zu dessen Auslösezuständen als erstes entsprechende Ist-Zustände vorliegen.

7. Appliance nach einem der vorhergehenden Ansprüche,
**gekennzeichnet durch**
eine Ausleseeinrichtung für eine SIM-Karte umfasst, wobei das Ladeprogramm zur Erstellung der Liste der Ist-Zustände ein SIM-Karte in der Ausleseeinrichtung, insbesondere IMSI, ausliest.

8. Appliance nach einem der vorhergehenden Ansprüche,
**dadurch gekennzeichnet, dass**
das Ladeprogramm dazu ausgebildet ist, einen Ist-Zustand anhand des Werts einer beschreibbaren Variablen zu erfassen.

9. Appliance nach einem der vorhergehenden Ansprüche, insbesondere nach Anspruch 8,
**gekennzeichnet durch**
eine Empfangseinheit, die dazu ausgebildet ist, die beschreibbare Variable in Reaktion auf ein Anlegen eines hochfrequentes elektromagnetisches Wechselfeld zu beschreiben.

10. Appliance nach einem der vorhergehenden Ansprüche, insbesondere nach
Anspruch 9,
**dadurch gekennzeichnet, dass**
die Empfangseinheit ein NFC-Transponder umfasst, die vorzugsweise per Induktion mit Strom versorgt wird.

11. Appliance nach einem der vorhergehenden Ansprüche,
**gekennzeichnet durch**
mindestens eine Kommunikationseinrichtung zum Empfangen mindestens eines Broadcast-Signals, wobei das Ladeprogramm dazu ausgebildet ist, in Abhängigkeit von dem Broadcast-Signal ein Firmwareabbild auszuwählen.

12. Appliance nach einem der vorhergehenden Ansprüche,
**gekennzeichnet durch**
einen Schalter zum Ein- und Ausschalten der Appliance, wobei das Ladeprogramm dazu ausgebildet ist, eine mittels des Schalters getätigte Eingabe zu empfangen und unter Berücksichtigung der Eingabe ein Firmware-Abbild auszuwählen.

13. Appliance nach einem der vorhergehenden Ansprüche,
**dadurch gekennzeichnet, dass**
mindestens eines der Firmware-Abbilder eine Authentifizierung verlangt.

14. Appliance nach einem der vorhergehenden Ansprüche,
**dadurch gekennzeichnet, dass**
das Ladeprogramm dazu ausgebildet ist:
- eine Identifikationskennzeichnung, insbesondere eine Hardware-ID, der Appliance zu erfassen;
- die Identifikationskennzeichnung an einen Server zu kommunizieren;
- von dem Server eine Eingabe zu empfangen; und
- unter Berücksichtigung der Eingabe ein Firmware-Abbild
auszuwählen.

15. Verfahren zur Konfiguration einer Appliance, insbesondere nach einem der
vorhergehenden Ansprüche, umfassend die Schritte:
- Erfassen eines Eingabesignals, das die Appliance zum Starten auffordert;
- Laden und Ausführen mindestens eines Ladeprogramms;
- Erstellen einer Liste von Ist-Zuständen durch das Abfragen von Signaleingängen;
- Laden einer Datenstruktur, die einer Vielzahl von Firmwareabbildern Auslösezustände zuordnet;
- Prüfen durch das Ladeprogramm welche der Auslösezustände durch die Ist-Zustände erfüllt sind;
- Auswählen eines Firmwareabbilds anhand der erfüllten Auslösezustände und der Datenstruktur;
- Booten des ausgewählten Firmwareabbilds.

16. Computerlesbarer Speicher mit Instruktionen zur Implementierung des Verfahrens nach Anspruch 12, wenn diese Instruktionen auf einer Recheneinheit ausgeführt werden.
